(19) Europäisches Patentamt
European Patent Office
Office européen des brevets

(11) **EP 1 842 424 A2**

(12) **EUROPEAN PATENT APPLICATION**

(43) Date of publication:
**10.10.2007 Bulletin 2007/41**

(51) Int Cl.:
*A01N 33/18* (2006.01)    *A01N 53/00* (2006.01)
*A01N 47/38* (2006.01)    *A01N 43/54* (2006.01)
*A01P 3/00* (2006.01)

(21) Application number: **06120102.6**

(22) Date of filing: **05.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **05.04.2006 IT MI20060665**

(71) Applicant: **AGRIMPORT S.P.A.**
**39100 BOLZANO (IT)**

(72) Inventor: **Miglio, Giovanni**
**40051, MALALBERGO (BOLOGNA) (IT)**

(74) Representative: **Tansini, Elio Fabrizio**
**c/o BUGNION S.p.A.**
**Viale Lancetti 17**
**20158 Milano (IT)**

(54) **Phytosanitary composition including a synergic association of active substances with a fungicidal action**

(57) The present invention relates to a fungicidal phytosanitary composition including a synergic association of active substances with a fungicidal action; administration forms and use thereof for combating and controlling some kinds of diseases of the spontaneous or cultivated plants caused by phytopathogenic fungi. Said fungicidal active substances are selected from dicloran and at least one from: iprodione, procymidone, mepanipyrim, pyrimethanil.

EP 1 842 424 A2

**Description**

The aim of the present invention is a fungicidal phytosanitary composition, wherein the active component includes a synergic association of active substances having per se a fungicidal activity, the administrations forms and the use thereof for combating and controlling some kinds of diseases of the spontaneous or cultivated plants, caused by phytopathogenic fungi.

Said synergic association consists of a mixture of 2,6-dichloro-4-nitroaniline [CAS 99-30-9], also known with the ISO name *dicloran* (hereinafter identified, for easiness, as dicloran), with at least a compound selected from the following:

- 3-(3,5-dichlorophenyl)-N-isopropyl-2,4-dioxoimidazolidin-1-carboxamide [CAS 36734-19-7], also known with the ISO name *isoprodione* (hereinafter identified, for easiness, as isoprodione);
- N-3-(3,5-dichlorophenyl)-1,2-dimethylcyclopropan-1,2-dicarboxamide [CAS 32809-16-8], also known with the ISO name *procymidone* (hereinafter identified, for easiness, as procymidone);
- N-(4-methyl-6-propyl-1-vinylpyrimidine-2-yl)-aniline [CAS 110235-47-7], also known with the ISO name *mepanipyrim* (hereinafter identified, for easiness, as mepanipyrim);
- N-(4,6-dimethylpyrimidine-2-yl)-aniline [CAS 53112-28-0], also known with the ISO name *pyrimethanil* (hereinafter identified, for easiness, as pyrimethanil).

In agriculture, the presence of parasitic adversities capable of producing serious damages of aesthetical nature or qualitative and/or quantitative production decreases on the plants is known.

Among the main pathogens known, there are the fungi, for the control of which a quantity of different active substances, known with the general name of fungicides, is used.

Despite the large utility represented by this class of compounds, the use of the fungicides in agriculture, analogously to that of the drugs used in the human or animal health sector, presents a number of only partly resolved drawbacks

A first drawback to be overcome is represented by the insufficient biological activity of the fungicides, at the allowed doses of use, in the presence of parasitic attacks of a particular intensity. In fact, in the presence of some pathologies, the use of the active substances at the doses registered by law and/or tolerated by the plant organism results partial or insufficient; in each case, necessarily to be ameliorated.

A second drawback is that the fungicides leave on the treated plants some residues with a more or less high quantity. The thicker generally result such residues, the higher are the fungicide dose used and the therapeutic effect desired. This problem gains an extreme importance in case of cultivated plants, because in this circumstance the fungicide residues can remain on the products intended for the human diet, sometimes overcoming the limits required by the law.

A third possible drawback is that often the fungicides used at the doses required for obtaining the therapeutic effect desired are harmful for the plants on which they are applied, by determining burns, anomalies in the growth or other damages known with the general name of phytotoxicity.

So far, the drawbacks above mentioned have still not obtained a satisfying answer.

There is therefore the need in the sector to provide phytosanitary compositions having a fungicidal activity characterized by the greatest activity (so as to allow the administration of low/minimum doses of active substance/s).

Likewise, there is the need of provide fungicidal compositions which leave an acceptably low or negligible residue and which are characterized by a low, or preferably no phytotoxicity (that is, in other words, a particularly high action selectivity).

The object of the present invention is to give an adequate answer to the problems above mentioned.

These and other objects, which will result apparent from the following detailed description, have been attained by the Applicant, which has found that a proper association of specific compounds having a fungicidal activity has unexpectedly proved to have a high, synergic, fungicidal action to a number of phytopathogenic fungi and that a phytosanitary composition whose phytotherapeutically active component includes said synergic association is capable of giving an adequate answer to the problems above mentioned.

Therefore, a fungicidal phytosanitary composition, whose active component includes said synergic association, forms a subject of the present invention, as reported in the appended independent claim.

A method for the preparation of the above composition forms another subject of the present invention, as reported in the appended independent claim.

The use of said composition as a fungicide forms a further subject of the present invention, as reported in the appended independent claim.

Preferred embodiments of the present invention are reported in the appended dependent claims.

We talk about synergy, existing for example between two different active substances A and B, when the total effectiveness of the mixture A+B unexpectedly results higher than that of the sum of the single efficacies of the same doses of A and B, when separately administered in the same environmental and/or test conditions.

On the contrary, when the total effect of the mixture A+B is exactly the one expected on the theoretic way (namely it is equivalent to the sum of the single efficacies of the same doses of A and B, separately administered), then we talk about additive action. In this case, no unexpected effects occur.

If, moreover, the association effect results even lower than the one shown by the single components, then we talk about antagonistic effect. The finding of such an activity decrease in an association of active substances involves a series of definitely undesired disadvantages.

Only in case of a synergic effect, the positive implications of a practical nature forming the aims already mentioned of the present invention can be found.

During its research works, the Applicant has quite unexpectedly found that a particular association of at least two fungicidal substances, selected from those above shown, admixed therebetween at doses lower than that at which said substances are commonly used, when individually administered, has shown to possess a clear and marked synergic activity towards a high number of phytopathogenic fungi.

In other words, by mixing together doses per se biologically not many significant of said at least two fungicidal substances, a product having a high biological activity (that is with an optimal fungicidal activity) and highly selective on the plant organs treated with low doses of active substances has surprisingly been carried out; thanks to the above features, said product has proved to be capable of leaving a very poor residue on the plant, and further it has not resulted phytotoxic.

Therefore, in the case of the present invention, the Applicant has unexpectedly found that, by mixing in opportune varying proportions and through an opportune solvent and/or dispersing medium, preferably but not exclusively with an aqueous base, the above active substances, fungicidal compositions having a high synergic effect, therefore capable of exerting an optimal fungicidal action at low doses of said active substances are obtained. Preferably, said fungicidal compositions contain doses of active substances that, individually used, would have an insufficient phytotherapeutic activity, as they are too low for being acceptably effective.

The present invention relates to a fungicidal phytosanitary composition, in which the active component of said composition includes an effective quantity of a synergic association of fungicidal substances consisting of a mixture of:

 i) an effective quantity of dicloran and
 ii) an effective quantity of at least a compound selected from: iprodione, procymidone, mepanipyrim, pyrimethanil.

In a particularly preferred embodiment of the invention, said active component of said composition consists of a synergic action of fungicidal substances consisting of a mixture of:

 i) an effective quantity of dicloran and
 ii) an effective quantity of at least a compound selected from: iprodione, procymidone, mepanipyrim, pyrimethanil.

Preferably, said synergic association consists of a mixture of:

 i) an effective quantity of dicloran and
 ii) an effective quantity of a compound selected from: iprodione, procymidone, mepanipyrim, pyrimethanil.

In a particularly preferred embodiment of the invention, said synergic association consists of a mixture of:

 i) an effective quantity of dicloran and
 ii) an effective quantity of iprodione.

In another particularly preferred embodiment of the invention, said synergic association consists of a mixture of:

 i) an effective quantity of dicloran and
 ii) an effective quantity of procymidone.

In another particularly preferred embodiment of the invention, said synergic association consists of a mixture of:

 i) an effective quantity of dicloran and
 ii) an effective quantity of mepanipyrim.

In a further particularly preferred embodiment of the invention, said synergic association consists of a mixture of:

 i) an effective quantity of dicloran and

ii) an effective quantity of pyrimethanil.

Following to the first unexpected examinations, the Applicant has carried out a number of experimental texts in order to confirm the presence of a synergic fungicidal activity due to the association between the compound of the above point I) (dicloran; in the following experiments/tables identified as "substance B") and at least one of the compounds of the above point ii) (iprodione, procymidone, mepanipyrim, pyrimethanil, respectively; in the following experiments/ tables identified as "substance A").

The synergism tests between the fungicides of the present invention have been carried through the following experimental procedure.

The methodology consists of seeding in the middle of proper culture boxes ("Petri dishes") filled with a nutritive substrate ("Agar") an inoculum consisting of a small circular colony of a phytopathogenic fungus, falling within the activity spectrum of the substances under investigation. The following development of the fungus on the Agar is revealed through the growth of the colonies, whose diameter can easily be measured. Adding the Agar with known concentrations of an active substance, having an antagonistic activity, the effectiveness of such substance in the inhibition of the growth of the colonies could be evaluated by measuring the decrease percentage in the diameter of the cultures treated with respect to the diameter of the cultures developed in the absence of the fungicide ("witness" plate).

By way of example, it should be assumed that the colony of a fungus in the witness plate after a certain time T from the inoculum has a diameter of 50 millimetres. It should also be assumed that, under the same conditions, in a plate whose substrate contains an active substance A at the concentration C ("$A_c$") the diameter of the colony after the time T is of only 25 millimetres, that is the half of the witness: in this case $A_c$ shows that it inhibits the development of the fungus of the 50% relative to the witness. The concentration of the active substance will then represent the so-called $DE_{50}$, (acronym of "Effective Dose at 50%), namely the concentration at which, under the test conditions, a certain active substance proves to be able of inhibiting of the 50% the development of a certain fungus, or generally a microorganism, with respect to the witness.

The synergic effect can be evaluated both visually (by comparing the diameters or the surfaces of the colonies in the witness with those of the colonies in the plates additioned with the active substances alone and in association), both using parameters obtained through proper mathematical formulas. Among the more adopted parameters at international level, there is the so-called FIC index ("Fractioned Inhibitory Concentration") which is expressed as follows:

if $DE_{50}(A)$ and $DE_{50}(B)$ are, respectively, the concentrations of A and B which determine an inhibition of the 50%, if used in admixture therebetween, while $DE_{50}(A)_{single}$ and $DE_{50}(B)_{single}$ are the concentrations of A and B which determine an inhibition of the 50%, for the active substances used alone it will be:

$$FIC\ index\ =\ FIC_A\ +\ FIC_B$$

wherein:

$$FIC_A\ =\ DE_{50}(A):DE_{50}(A)_{single}$$

$$FIC_B\ =\ DE_{50}(B):DE_{50}(B)_{single}$$

If the index value results around the unit, the association effect between active substances has to be considered substantially additive. If such value results higher than the unit, the association effect between active substances has to be considered antagonistic. Finally, only if the value results lower than the unit, the association effect between the used active substances has to be considered synergic.

In a first cycle of tests, the Applicant has used the phytopathogenic fungus ash-grey *Botrytis* pers., which is considered phylogenetically similar and therefore also representative for other species of phytopathogenic fungi (for example, those belonging to the genera *Alternaria; Cladosporium; Monilinia; Phoma; Sclerotinia; Sclerotium; Rhizoctonia, Septoria)* which often affect the wild and cultivated plants. The results of this first test (first replication) are reported in the following Table 1, wherein the concentrations of the active substances A and B are expressed in parts per million (ppm) based on the substrate, while the diameters of the fungal colonies (expressed in millimetres) have been detected five days after the inoculation.

The "total concentration" parameter includes the sum of the active substances existing on the substrate (for example, when a mutual weight ratio in ppm of A to B equal to 1:1 is used, if the concentration of the sum A+B is equal to 5 ppm, this will mean 2.5 ppm of the compound A + 2.5 ppm of the compound B).

**Table 1**

| Substance A, iprodione - Substance B, dicloran. Concentration ratio (ppm) A:B = 1:1 | | | | | | |
|---|---|---|---|---|---|---|
| | total concentration (ppm) | | | | | |
| substance | 0,0 | 0,1 | 0,5 | 1,0 | 2,5 | 5,0 |
| A | 80 | 80 | 35 | 22 | 0 | 0 |
| B | 80 | 80 | 80 | 68,5 | 25 | 13 |
| A+B | 80 | 80 | 38,5 | 29 | 0,5 | 0 |

In a second replication, quite similar to the preceding one for materials and methods, the results have been those reported in the following Table 2:

**Table 2**

| Substance A, iprodione - Substance B, dicloran. Concentration ratio (ppm) A:B = 1:1 | | | | | | |
|---|---|---|---|---|---|---|
| | total concentration (ppm) | | | | | |
| substance | 0,0 | 0,1 | 0,5 | 1,0 | 2,5 | 5,0 |
| A | 80 | 80 | 29,5 | 20 | 0,1 | 0 |
| B | 80 | 80 | 80 | 68,5 | 23,5 | 11 |
| A+B | 80 | 80 | 37,5 | 28,5 | 1 | 0 |

In a third replication, quite similar to the preceding ones for materials and methods, the results have been those reported in the following Table 3:

**Table 3**

| Substance A, iprodione - Substance B, dicloran. Concentration ratio (ppm) A:B = 1:1 | | | | | | |
|---|---|---|---|---|---|---|
| | total concentration (ppm) | | | | | |
| substance | 0,0 | 0,1 | 0,5 | 1,0 | 2,5 | 5,0 |
| A | 80 | 80 | 31 | 21 | 0,1 | 0 |
| B | 80 | 80 | 80 | 69 | 23 | 10,5 |
| A+B | 80 | 80 | 39,5 | 28 | 1 | 0 |

The mean values resulting from the three replications reported in the Tables 1-3 have been used for obtaining the FIC indexes according to the formula above described. Based on the calculations carried out on the same, a FIC index equal to 0.71, showing the presence of action synergy between the tested component, is resulted.

In a second cycle of tests, carried out with the same materials and methods of the preceding ones, the possible synergic effects shown by associations of iprodione and dicloran in mutual weight ratios (ppm) different from 1:1 have been verified.

In this case, the detections concerning the growth inhibition of the fungal colonies (diameter of said colonies in millimetres) have been carried out at a distance of three days from the execution of the inoculum.

By way of example, the results of tests wherein the ratios A:B = 1:9 and A:B = 9:1, respectively, have been tested, are reported hereinbelow.

The results of a first replication are reported in the following Table 4.

**Table 4**

| Substance A, iprodione - Substance B, dicloran. Concentration ratio (ppm) A:B = 1:9 and 9:1 | | | | | | |
|---|---|---|---|---|---|---|
| | total concentration (ppm) | | | | | |
| substance | 0,0 | 0,1 | 0,5 | 1,0 | 2,5 | 5,0 |
| A | 45 | 45 | 18,5 | 13 | 0 | 0 |
| B | 45 | 44 | 39,5 | 31,5 | 13,5 | 4,5 |
| A 10% + B 90% | 45 | 45 | 37,5 | 37,5 | 13,5 | 6 |
| A 90% + B 10% | 45 | 39,5 | 18,5 | 18,5 | 0 | 0 |

The results of a second replication, quite similar to the preceding one as for materials and methods, are reported in the following Table 5.

**Table 5**

| Substance A, iprodione - Substance B, dicloran. Concentration ratios (ppm) A:B = 1:9 and 9:1 | | | | | | |
|---|---|---|---|---|---|---|
| | total concentration (ppm) | | | | | |
| substance | 0,0 | 0,1 | 0,5 | 1,0 | 2,5 | 5,0 |
| A | 50 | 49,5 | 21 | 12,5 | 0 | 0 |
| B | 50 | 50 | 45,5 | 35 | 13,5 | 5 |
| A 10% + B 90% | 50 | 50 | 40 | 29,5 | 14 | 6,5 |
| A 90% + B 10% | 50 | 48,5 | 19,5 | 14 | 0 | 0 |

The results of a third replication, quite similar to the preceding ones for materials and methods, are reported in the following Table 6.

**Table 6**

| Substance A, iprodione - Substance B, dicloran. Concentration ratios (ppm) A:B = 1:9 and 9:1 | | | | | | |
|---|---|---|---|---|---|---|
| | total concentration (ppm) | | | | | |
| substance | 0,0 | 0,1 | 0,5 | 1,0 | 2,5 | 5,0 |
| A | 54 | 49 | 21,5 | 12,5 | 0 | 0 |
| B | 54 | 54,5 | 45 | 35 | 13,5 | 6,5 |
| A 10% + B 90% | 54 | 54 | 41 | 28 | 13 | 5,5 |
| A 90% + B 10% | 54 | 50,5 | 20 | 15 | 0 | 0 |

The mean values resulting from the three replications reported in the Tables 4-6 have been used for obtaining the FIC indexes according to the formula above described. Based on the calculations carried out thereon,

- with the association A 10% + B 90%, a FIC index = 1.1
- with the association A 90% + B 10%, a FIC index = 0.83 are resulted.

Analogous tests to those above described have been carried out with the same procedures, on the same fungus using associations of procymidone and dicloran; the obtained results have proved to be statistically coherent with those obtained with the association iprodione and dicloran above mentioned.

In a further tests cycle, the possible synergic effects shown by associations of mepanipyrim and dicloran, using the fungus *Monilia (=Monilinia)* fructigena pers, have been verified.

The followed method is analogous to that above described. In this case, the detections concerning the growth inhibition of the fungal colonies (diameter of said colonies in millimetres) have been carried out at a distance of four days from the execution of the inoculum.

In the following table 7, the results obtained by using an association of mepanipyrim and dicloran in a mutual weight ratio (ppm) of 1:1 are reported.

Said results substantially confirm the presence of an action synergy between the two active substances, as already observed from the experimental tests carried out using association between dicloran and iprodione and, respectively, dicloran and procymidone.

**Table 7**

| Substance A, mepanipyrim - Substance B, dicloran. Concentration ratio (ppm) A:B = 1:1 | | | | | | |
|---|---|---|---|---|---|---|
| | total concentration (ppm) | | | | | |
| substance | 0,0 | 0,1 | 0,5 | 1,0 | 2,5 | 5,0 |
| A | 80 | 80 | 33 | 20 | 2 | 0 |
| B | 80 | 80 | 80 | 65 | 23 | 10 |
| A+B | 80 | 80 | 41 | 26 | 10 | 0 |

Tests similar to the one above described have been carried out with the same procedure, on the same fungus using associations of pyrimethanil and dicloran; the obtained results have proved to be statistically coherent with those obtained with the association mepanipyrim and dicloran above mentioned.

The synergic association of the present invention is present in the fungicidal composition in a total quantity (total weight of the association components) between 10% and 90% by weight, based on the total weight of the composition; preferably, said association is present in a quantity between 20% and 60% by weight, based on the total weight of the composition; more preferably, from 25% to 50% by weight.

Within said synergic association, the mutual weight ratio between dicloran and at least one of the compounds of the above point ii) is usually between 1:12 and 12:1, preferably from 1:10 to 10:1, more preferably from 1:9 to 9:1.

In a particularly preferred embodiment, said ratio has resulted between 1:10 and 8:1.

The preferred administration dosage of said association is between 1 kg and 5 kg per hectare of cultivated surface to be treated.

The present invention relates than to a fungicidal phytosanitary composition containing the synergic association above described, as well as said synergic association of dicloran and at least a compound selected from: iprodione, procymidone, mepanipyrim, pyrimethanil.

Furthermore, the present invention relates to the use of said synergic association as a fungicide, as well as the use of said association for the preparation of phytosanitary composition having a fungicidal activity for the prevention and the treatment of plant and/or cultivation diseases caused by pathogenic fungi.

The present invention then relates to said phytosanitary compositions for the prevention and the treatment of plant and/or cultivation diseases caused by pathogenic fungi.

The present invention further relates to the plant and cultivation treatment for the prevention of the onset of for combating the propagation of diseases caused by pathogenic fungi.

In a preferred embodiment of the present invention, the fungicidal composition consists of the aforesaid synergic association in a liquid form, in which the components are dissolved in an aqueous phase.

In a second preferred embodiment, the fungicidal composition consists of the aforesaid synergic association in a liquid form, in which the components are suspended in form of a concentrated suspension.

In a third preferred embodiment, the fungicidal composition consists of the aforesaid synergic association in a liquid form, in which the components are present in form of emulsion or micro-emulsion.

In a fourth preferred embodiment, the fungicidal composition consists of the aforesaid synergic association in a liquid form, in which the components are present in form of paste or gel.

In a fifth preferred embodiment, the fungicidal composition consists of the aforesaid synergic association in a solid form, in which the components are present in form of powder to be dissolved in a liquid medium.

In a sixth preferred embodiment, the fungicidal composition consists of the aforesaid synergic association in a solid form, in which the components are present in form of granules or micro-granules to be dissolved in a liquid medium.

In a seventh preferred embodiment, the fungicidal composition consists of the aforesaid synergic association in a solid form, in which the components are present in form of pellets, or tablets, or in other three-dimensional forms suitable for being dissolved in a liquid medium.

In an eighth preferred embodiment, the fungicidal composition consists of the aforesaid synergic association in a solid form, in which the components are present in form of pellets, or tablets, or other three-dimensional forms suitable for being vaporized or nebulized in form of smoke and/or aerosol.

Other embodiments of the composition of the present invention, including the synergic association of fungicidal compounds above described, are feasible by a skilled in the art using known formulation techniques and, accordingly, they fall within the ambit of the present invention. In a preferred embodiment, the fungicidal composition of the present invention further includes additives selected from: antifoaming agent, thickeners, antifreeze, antifermentation agents, wetting agents, chelating agents, dispersants, builders, suspending agents, stabilizers, surfactants, carriers, inert excipients known and commonly used in the sector.

The composition of the present invention is prepared by employing formulation techniques known in the sector and commonly used by the skilled in the art, using the normal equipments employed for mixing, dosing, compressing the desired solutions, suspensions or solid mixtures of the desired ingredients.

For example, as for the solid form formulations, a preferred composition of the invention is prepared by compression or granulation of the mixture reported in the following Table 8.

**Table 8**

| Substance | CAS No. | Function | % content |
|---|---|---|---|
|  |  |  |  |
| 95% purity technical dicloran | 36734-19-7 | Active substance | 10.52 |
| Group ii) substance with a purity of 95% | - | Active substance | 10.52 |
| Sodium lauryl sulfate | 68587-47-7 | Wetting agent | 2.00 |
| Calcium ligninsulfate | 8861-52-7 | Dispersant | 5.00 |
| Sodium dinaphthalenmethansulfate | 9084-06-04 | Suspending agent | 5.00 |
| Fumaric acid | 110-17-8 | Stabilizer | 10.00 |
| Kaolin | 1332-58-7 | Inert substance | qs to 100 |

As for the liquid form formulations, a preferred composition of the invention is prepared, for example, by dissolving in water the mixture reported in the following Table 9.

**Table 9**

| Substance | CAS No. | Function | % content |
|---|---|---|---|
|  |  |  |  |
| 95% purity technical dicloran | 36734-19-7 | Active substance | 10.52 |
| Group ii) substance with a purity of 95% | - | Active substance | 10.52 |
| Tristirylphenol etoxylated | 105362-40-1 | Wetting agent | 4.00 |
| Silicone antifoaming | - | Antifoaming | 0.20 |
| Etheropolysaccharide | 1138-66-2 | Thickener | 0.20 |
| Propylene glycol | 57-55-6 | Antifreeze | 8.00 |
| Sodium orthophenyl phenate | 132-27-4 | Antifermentation agent | 0.10 |
| Pure water | - | Diluent | Qs to 100 |

Always referring to the liquid form formulations, another preferred composition of the invention is prepared, for example, by dissolving in water the mixture reported in the following Table 10.

**Table 10**

| Substance | CAS No. | Function | % content |
|---|---|---|---|
| | | | |
| 95% purity technical dicloran | 36734-19-7 | Active substance | 10.52 |
| Group ii) substance with a purity of 95% | - | Active substance | 10.52 |
| Polyvynil pyrrolidone | 9003-39-8 | Dispersant | 0.70 |
| Propylene glycol | 57-55-6 | Antifreeze | 5.00 |
| Ethylenediaminetetraacetic acid | 64-02-8 | Chelating agent | 0.80 |
| Benzothiazole | 2634-33-5 | Antifermentation agent | 0.30 |
| Xanthan gum | 11138-66-2 | Thickener | 0.20 |
| Silicone surfactant | 7631-86-9 | Surfactant | 1.00 |
| Methylated silicones | - | Surfactant | 0.05 |
| Pure water | - | Diluent | qs to 100 |

The synergic fungicidal composition of the present invention has unexpectedly proved to be highly effective towards a series of common phytopathogenic fungi such as, by mere way of non limiting example, the fungi of the genera *Alternaria; Botrytis; Cladosporium; Monilinia; Phoma; Sclerotinia; Sclerotium; Rhizoctonia, Septoria* which affect wild and cultivated plants.

Advantageously, said composition has further shown to leave low levels of residue of the single active substances on the cultivated plants and in particular on the edible parts of the same.

Said composition has further shown to have a high selectivity and a low phytotoxicity, thus allowing to administrate the plants with low effective doses, by respecting at most the integrity of the plants subjected to the treatments, therefore without producing thereon significant damages of an aesthetical and/or functional nature.

Said composition is very suitable for the application to the plants or the ground in order to combat the aforesaid infestation by parasitic fungi.

As for the application method of said composition, by mere way of example, in case of applications directly to the plants, a first administration method consists of the dissolution or dispersion of the composition, at the dose shown between 1 and 5 kg per each hectare of cultivated surface to be treated, in a water volume varying from 30 to 2.000 litres. Such mixture quantity consisting of compound + water will subsequently be sprayed on the plants through proper atomizing or nebulizing devices specifically designed for this type of application. Further administration methods foresee the use of bars having nozzles from which the mixture is exiting by pressure or drop, or analogous devices applied on flying means, such as aircrafts, helicopters or ultra-light aeroplanes.

In case of ground application, a first administration method consists of the association of the aforesaid composition, in doses varying between 1 and 50 kg per each hectare of ground, at a water volume sufficient for a uniform and homogenous wetting of the ground itself. The mixture consisting of compound + water could be administered to the ground through devices used for the irrigation and/or administration of fertilizers, such as watering-cans, perforated hoses, interred tubes, fixed pressure nozzles or similar. Another possible administration method of the aforesaid mixture foresees the use of spraying bars foreseen for the application of herbicides to the ground, or dropping means normally used for the localized administration of water and fertilizers, or nebulization fixed nozzles with a low volume (usually known as "Toko jet" or similar), or still injection piles usually employed for the localized deep-administration of antiparasitic agents and/or fertilizers.

**Claims**

1.  Fungicidal phytosanitary composition, wherein the active component of said composition includes an effective quantity of a synergic association of fungicidal substances consisting of a mixture of:

    i) an effective quantity of dicloran and
    ii) an effective quantity of at least a compound selected from: iprodione, procymidone, mepanipyrim, pyrimethanil.

2.  Composition according to claim 1, wherein said active component consists of a synergic association of fungicidal substances consisting of a mixture of:

i) an effective quantity of dicloran and
ii) an effective quantity of at least a compound selected from: iprodione, procymidone, mepanipyrim, pyrimethanil.

3. Composition according to any one of the claims 1 and 2, wherein said synergic association consists of a mixture of:

i) an effective quantity of dicloran and
ii) an effective quantity of a compound selected from: iprodione, procymidone, mepanipyrim, pyrimethanil.

4. Composition according to claim 3, wherein said association consists of a mixture of:

i) an effective quantity of dicloran and
ii) an effective quantity of iprodione.

5. Composition according to claim 3, wherein said association consists of a mixture of:

i) an effective quantity of dicloran and
ii) an effective quantity of procymidone.

6. Composition according to claim 3, wherein said association consists of a mixture of:

i) an effective quantity of dicloran and
ii) an effective quantity of mepanipyrim.

7. Composition according to claim 3, wherein said association consists of a mixture of:

i) an effective quantity of dicloran and
ii) an effective quantity of pyrimethanil.

8. Composition according to any one of the preceding claims, wherein said synergic association is present at a total quantity between 10% and 90% by weight, based on the total weight of the composition; preferably, said association is present in a quantity between 20% and 60% by weight, based on the total weight of the composition; more preferably, from 25% to 50% by weight.

9. Composition according to any one of the preceding claims, wherein said synergic association of dicloran and at least one of the compounds of the above point ii) are present in a mutual weight ratio between 1:12 and 12:1; preferably, from 1:10 to 10:1; more preferably from 1:9 to 9:1.

10. Composition according to claim 9, wherein said ratio is between 1:10 and 8:1.

11. Composition according to any one of the preceding claims, wherein said synergic association is administered at a dosage between 1 kg and 5 kg per hectare of cultivated surface to be treated.

12. Composition according to any one of the preceding claims, further including additives selected from: antifoaming agent, thickeners, antifreeze, antifermentation agents, wetting agents, chelating agents, dispersants, builders, suspending agents, stabilizers, surfactants, carriers, inert excipients.

13. Use of a composition according to any one of the preceding claims for the prevention and the treatment of plant and/or cultivation diseases, caused by pathogenic fungi.

14. Fungicidal synergic association consisting of a mixture of:

i) an effective quantity of dicloran and
ii) an effective quantity of at least a compound selected from: iprodione, procymidone, mepanipyrim, pyrimethanil.

15. Association according to claim 14, consisting of a mixture of:

i) an effective quantity of dicloran and

ii) an effective quantity of a compound selected from: iprodione, procymidone, mepanipyrim, pyrimethanil.

**16.** Use of an association according to any one of the claims 14 and 15 as a fungicide.

**17.** Use according to claim 16 for the preparation of a composition according to any one of the claims 1 to 12 for the prevention and the treatment of plant and/or cultivation diseases, caused by pathogenic fungi.

**18.** Method for the treatment of plant and/or cultivation diseases, caused by pathogenic fungi, including the administration to said plants and/or cultivations of an effective quantity of a composition according to any one of the claims 1 to 12.